# EUROPEAN PATENT SPECIFICATION

(11) **EP 2 416 404 B1**
(45) Date of publication and mention of the grant of the patent: **22.01.2014**
(21) Application number: 10758965.7
(22) Date of filing: 16.03.2010
(51) Int. Cl.: H01M 2/12

(54) **ELECTROCHEMICAL CELL WITH A GAS PERMEABLE MEMBRANE**
ELEKTROCHEMISCHE ZELLE MIT EINER GASDURCHLÄSSIGEN MEMBRAN
CELLULE ÉLECTROCHIMIQUE À MEMBRANE PERMÉABLE AUX GAZ

(30) Priority: 30.03.2009 KR 20090027022; 04.09.2009 KR 20090083484
(43) Date of publication of application: 08.02.2012
(73) Proprietor: Kim's Techknowledge Inc., Daejeon 305-434 (KR)
(72) Inventor: KIM, Seong Min, Daejeon 305-335 (KR)
(74) Representative: Molnia, David
(86) International application number: PCT/KR2010/001609
(87) International publication number: WO 2010/114240

(56) References cited:
- WO-A1-97/44848
- WO-A2-2007/072361
- GB-A- 1 205 943
- JP-A- 62 122 054
- KR-A- 19980 023 226
- KR-A- 20040 108 741

## Description

### [Technical Field]

The present invention relates to an electrochemical cell, and more particularly, to an electrochemical cell that minimizes electrochemical cells such as capacitors or secondary batteries, and improves reliability and safety of the electrochemical cells.

### [Background Art]

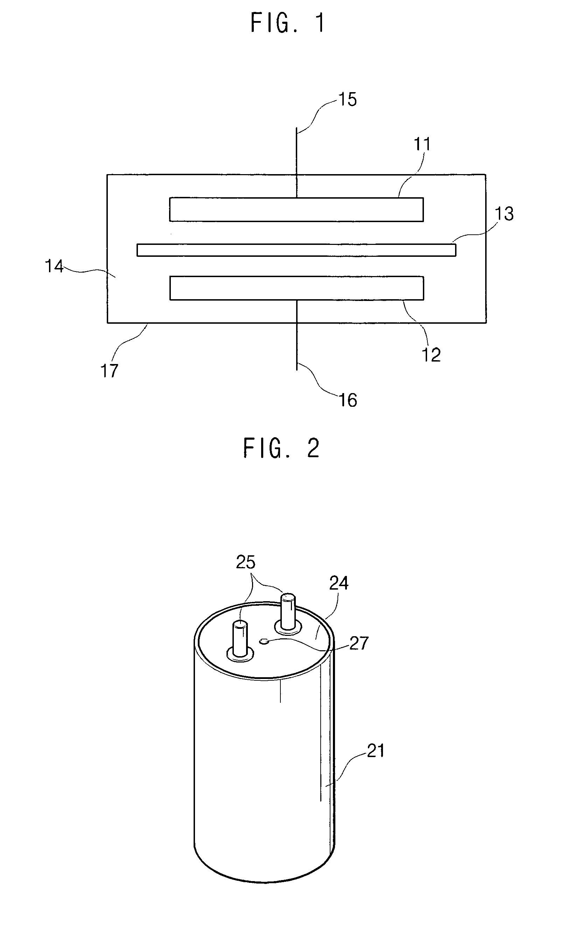

In general, electrochemical cells such as batteries or capacitors have a configuration shown in FIG. 1.

FIG. 1 is a diagram showing a structure of a unit cell of an electrochemical cell in the related art. Referring to FIG. 1, the unit cell includes a positive electrode 11, a negative electrode 12, a separator 13, an electrolyte 14, a positive terminal 15, a negative terminal 16, and a case 17. Electrical energy is stored in each of the positive electrode 11 and the negative electrode 12.

In general, the positive electrode 11 and the negative electrode 12 are constituted by an active material and a current collector. The electrical energy is stored in the active material and the current collector provides a movement path of the electrical energy stored in the active material.

In the case of an electric double layer capacitor, activated carbon is primarily used as the active material and an aluminum sheet is generally used as the current collector.

The active material is mixed with a binder, a conductivity improving agent, and a solvent to be made into a state of slurry or paste and thereafter, applied to the current collector to become an electrode.

In the case of an aluminum electrolytic capacitor, the electrode is formed by etching-treating the aluminum sheet.

The electrolyte 14 is a mobile medium of an ion that allows the electrical energy to be stored in the active material.

The electrolyte 14 is an element particularly required for an electrochemical or electrolytic cell such as a battery, an electric double layer capacitor, or an aluminum electrolytic capacitor, but is not used for an electrostatic cell such as a film condenser.

The separator 13 is inserted between the positive electrode 11 and the negative electrode 12 to electrically insulate the positive electrode 11 and the negative electrode 12 from each other.

When a liquid electrolyte is used in the secondary battery, the electric double layer capacitor, and the aluminum electrolytic capacitor, the separator 13 permeates ions of the liquid electrolyte, but a porous sheet such as paper or fiber which is electrically a nonconductor is generally used as the separator 13.

The positive terminal 15 and the negative terminal 16 serve as passages through which the electrical energy is transferred to the electrochemical cell and have various forms for each application field.

The case 17 is used to separate the electrochemical cell from the outside and made by various materials and shapes depending on a type of the electrochemical cell.

Gas may be inevitably generated from the electrochemical cell which is in operation.

When the gas is generated, the gas may be temporarily generated as the gas is generated during formation similar to a lithium ion battery and the gas may be slowly generated over a long time similar to the electric double layer capacitor.

The generation of the gas increases internal pressure of the electrochemical cell. Therefore, the methods used to prevent an increase in the internal pressure up to a predetermined value or more by making the case 17 of the electrochemical cell sturdy or placing a spare space in the electrochemical cell are used in consideration of increase in the internal pressure of the electrochemical cell.

However, these methods increase the weight and volume of the electrochemical case 17 to deteriorate the performance and increase the price thereof.

In particular, the gas generated inside of the electrochemical cell using the liquid electrolyte, for example, the battery or the electric double layer capacitor exists on the electrolyte and the surface of the active material, resulting in decreasing an available area and serving as an obstacle in the electrolyte, and as a result, resistance is increased to deteriorate the reliability of the electrochemical cell.

When holes are formed in the case 17 of the electrochemical cell and a gas permeable membrane is installed, gas generated through the gas permeable membrane may be discharged to the outside. Since the amount of the gas generated from the inside of the electrochemical cell increases as the capacity of the electrochemical cell increases, the area of the gas permeable membrane needs to be increased in order to discharge the gas.

However, as the area of the gas permeable membrane increases, the rupture pressure of the gas permeable membrane itself decreases. When the rupture pressure of the gas permeable membrane is excessively low, it is difficult to use the gas permeable membrane for the electrochemical cell.

In particular, when the liquid electrolyte is used in the electrochemical cell, the case and the gas permeable membrane should have chemical resistance. The case is generally made of metal such as aluminum or stainless steel or a material such as a plastic resin. A film made of PE, PP, PPS, or PTFE having excellent chemical resistance is generally used for the gas permeable membrane. However, since the material having the excellent chemical resistance has excellent stability, it is difficult to bond the material to other materials. Furthermore, since a bonded portion requires sealability, the bonding property of the gas permeable membrane is a very important element.

### [Disclosure]

### [Technical Problem]

Accordingly, in order to solve the problems, an object of the present invention is to provide an electrochemical cell where a gas permeable membrane is easily installed, which prevents the rupture pressure of the gas permeable membrane from being decreased.

### [Technical Solution]

In order to achieve the above object, an electrochemical cell according to an exemplary embodiment of the present invention includes: an electrode storing electric energy; a case with one or more holes receiving the electrode and connected with the outside; and a gas permeable membrane installed around the hole. Herein, the gas permeable membrane has a bonded surface which is subjected to surface treatment to improve a bonding property.

### [Advantageous Effects]

According to exemplary embodiments of the present invention, a gas permeable membrane is easily installed in an electrochemical cell and gas generated while the electrochemical cell is in operation is smoothly discharged to the outside to suppress the increase in the internal pressure of the electrochemical cell, decrease the weight and volume of the electrochemical cell, and improve the reliability of the electrochemical cell.

### [Description of Drawings]

FIG. 1 is a diagram showing a structure of a unit cell of an electric energy storage device in the related art.
FIG. 2 is a perspective view showing a structure of a cylindrical electrochemical cell according to an exemplary embodiment of the present invention.
FIG. 3 is an exploded perspective view of the cylindrical electrochemical cell shown in FIG. 2.
FIG. 4 is a perspective view showing a structure of a rectangular electrochemical cell according to another exemplary embodiment of the present invention.
FIG. 5 is an exploded perspective view of the rectangular electrochemical cell shown in FIG. 4.
FIG. 6 is an enlarged perspective view of a lid shown in FIGS. 2 and 3.
FIG. 7 is a bottom perspective view of the lid shown in FIG. 6.
FIG. 8 is a bottom perspective view of the lid showing a state in which a gas permeable membrane is installed in the lid shown in FIG. 7.
FIGS. 9 to 12 are diagrams showing a lid according to another exemplary embodiment of the present invention.
FIG. 13 is a bottom perspective view of a lid of a cylindrical electrochemical cell according to another exemplary embodiment of the present invention.
FIGS. 14 and 15 are perspective views specifically showing one example in which a gas permeable membrane is installed on a side of a body constituting the case of the rectangular electrochemical cell shown in FIG. 4.
FIGS. 16 and 17 are perspective views showing one example in which a gas permeable membrane is installed on the bottom of a body constituting a case of a rectangular electrochemical cell according to yet another exemplary embodiment of the present invention.
FIG. 18 is a perspective view specifically showing the shape of the bottom of a body constituting the case of the rectangular electrochemical cell shown in FIGS. 16 and 17.
FIG. 19 is a perspective view showing a rectangular electrochemical cell according to yet another exemplary embodiment of the present invention.

### [Best Mode]

The present invention is more completely described with reference to the accompanying drawings showing exemplary embodiments. However, the present invention is not limited to the exemplary embodiments to be described below. Therefore, the exemplary embodiments are provided to enable those skilled in the art to thoroughly understand the teaching of the present invention and to completely inform the scope of the present invention and the exemplary embodiment is just defined by the scope of the appended claims. In the accompanying drawings appended in the specification, the size or the shape of each of elements may be ideal or enlarged for clarity. Hereinafter, exemplary embodiments of the present invention will be described in detail with reference to the accompanying drawings.

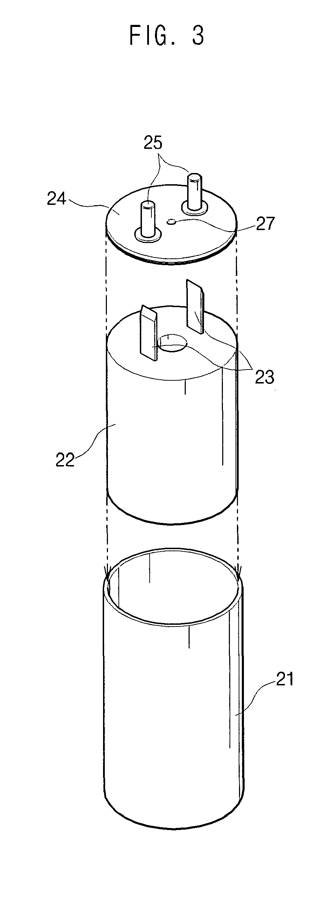

FIG. 2 is a perspective view showing a structure of a cylindrical electrochemical cell according to an exemplary embodiment of the present invention and FIG. 3 is an exploded perspective view of the cylindrical electrochemical cell shown in FIG. 2.

Referring to FIGS. 2 and 3, the cylindrical electrochemical cell according to the exemplary embodiment of the present invention includes case 21, 24 and a cylindrical electrode assembly 22. A receiving space is formed in the case 21, 24. The electrode assembly 22 is received in the receiving space.

Specifically, the case 21, 24 includes a body 21 and a lid 24.

The body 21 has a cylindrical shape in which an upper part is opened and has the receiving space where the electrode assembly 22 is received, therein.

The lid 24 has a circular shape and covers the opened upper part of the body 21 with the electrode assembly 22 received in the receiving space of the body 21. As a result, the electrode assembly 22 is separated from the outside by the case 21, 24 constituted by the body 21 and the lid 24. Two terminals 25 are formed on the top surface of the lid 24 and the two terminals 25 are electrically connected with two leads 23 formed on the top surface of the electrode assembly 22, respectively. Further, one or a plurality of holes 27 (only one hole is shown in FIGS. 2 and 3) penetrating the lid 24 are formed in the lid 24. A gas permeable membrane (not shown in FIGS. 2 and 3) is installed on the bottom surface of the lid 24. As described above, gas generated from the inside of the electrochemical cell is smoothly discharged to the outside by the hole and the gas permeable membrane that are formed in the lid 24 to thereby suppress the increase in internal pressure.

In particular, in the exemplary embodiment of the present invention, a bonded surface where the gas permeable membrane is bonded to the lid 24 is surface-treated in order to easily bond the gas permeable membrane and the lid 24 that are made of different materials to each other. Therefore, the gas permeable membrane may be easily installed in the lid 24. A detailed description thereof will be made below in detail.

The electrode assembly 22 has the cylindrical shape to be easily received in the receiving space of the body 21. Two leads 23 are formed on the top surface of the electrode assembly 22.

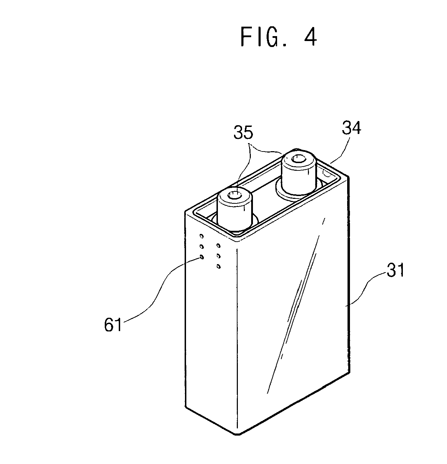

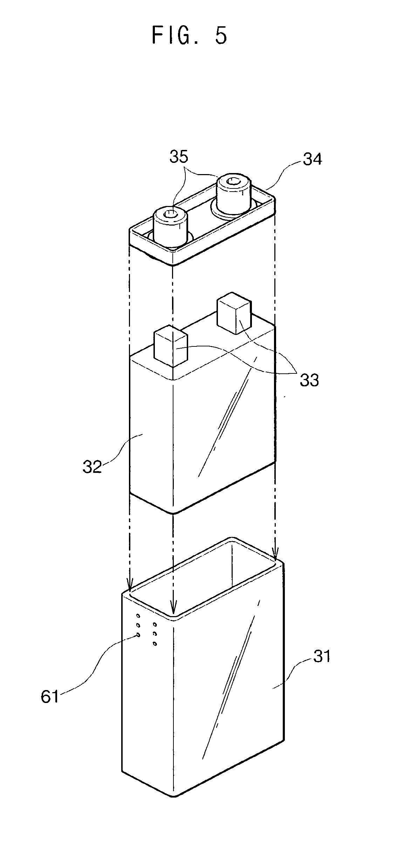

FIG. 4 is a perspective view showing a structure of a rectangular electrochemical cell according to another exemplary embodiment of the present invention and FIG. 5 is an exploded perspective view of the rectangular electrochemical cell shown in FIG. 4.

Referring to FIGS. 4 and 5, the rectangular electrochemical cell according to another exemplary embodiment of the present invention includes a case 31, 34 and an electrode assembly 32.

A receiving space is formed in the case 31, 34 to receive the electrode assembly 32.

Specifically, the case 31, 34 includes a body 31 and a lid 34.

The body 31 has a rectangular barrel shape in which an upper part is opened and has a receiving space where the electrode assembly 32 is received, therein. Further, one or a plurality of holes 61 for smoothly discharging gas generated from the inside are formed on the side of the body 31. A gas permeable membrane (not shown in FIGS. 4 and 5) having a bonded surface that is surface-treated in order to improve a bonding property to the body 31 is installed on an inner surface corresponding to the side of the body. A detailed description thereof will be made below in detail. The lid 34 has the rectangular shape and covers the opened upper part of the body 31 with the electrode assembly 32 received in the body 31. As a result, the electrode assembly 32 is separated from the outside by the case constituted by the body 31 and the lid 34. Two terminals 35 are formed on the top surface of the lid 34 and the two terminals 35 are electrically connected with two leads 33 formed on the top surface of the electrode assembly 32, respectively.

The electrode assembly 32 has a rectangular tubular shape to be easily received in the receiving space of the case 31. Two leads 33 are formed on the top surface of the electrode assembly 32. The electrode assembly 32 is easily received in the receiving space of the case 31 through the opened upper part of the case 31.

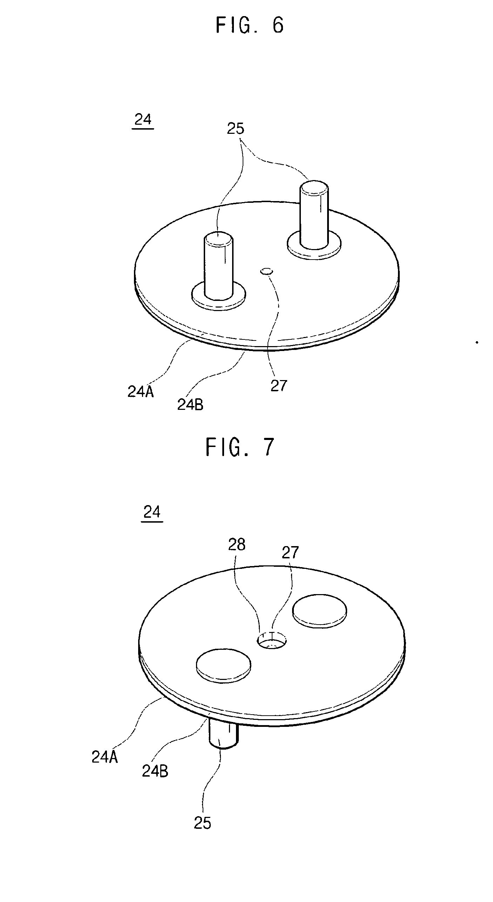

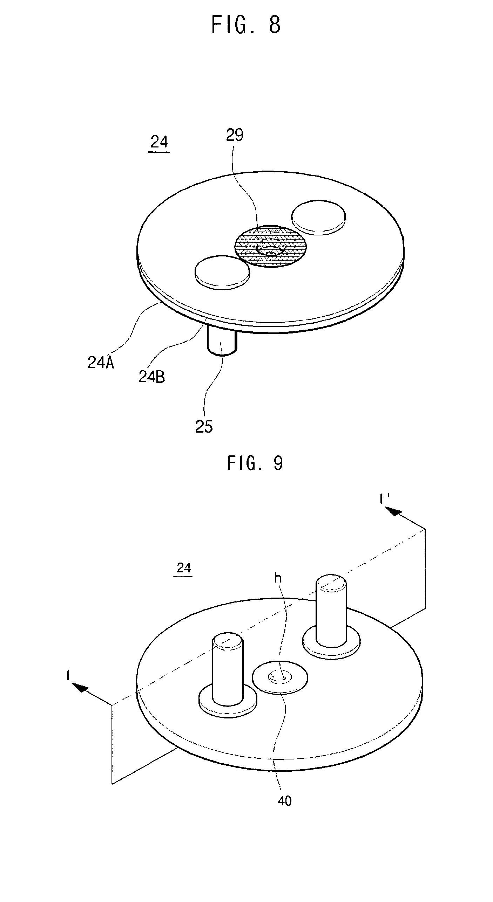

FIG. 6 is an enlarged perspective view of a lid shown in FIGS. 2 and 3, FIG. 7 is a bottom perspective view of the lid shown in FIG. 6, and FIG. 8 is a bottom perspective view of the lid showing a state in which a gas permeable membrane is installed in the lid shown in FIG. 7. Referring to FIGS. 6 to 8, the hole is formed at the center of the lid 24 according to the exemplary embodiment of the present invention to discharge the gas generated from the inside of the electrochemical cell which is in operation to the outside.

Specifically, the lid 24 includes a rubber plate 24A and a resin plate 24B coupled (alternatively, bonded) onto the bottom surface of the rubber plate 24A. The size of the rubber plate 24A is substantially the same as that of the resin plate 24B.

A first hole 27 having a first diameter is formed at the center of the rubber plate 24A and a second hole 28 having a second diameter larger than the first diameter is formed at the center of the resin plate 24B.

A gas permeable membrane 29 covering the second hole 28 is bonded onto the bottom surface of the resin plate 24B.

The hole formed at the center of the rubber plate 24A has the diameter smaller than the hole formed at the center of the resin plate 24B in order to protect the gas permeable membrane 29 by using the rubber plate 24A positioned outside.

Meanwhile, in the exemplary embodiment, the diameter of the first hole 27 formed in the rubber plate 24A is different from that of the second hole 28 formed in the resin plate 24B, but the diameters may be the same as each other.

The lid 24 may not be particularly configured by bonding the resin plate 24B and the rubber plate 24A but may be designed as an integrated lid 24 made of any one material of metal or a resin.

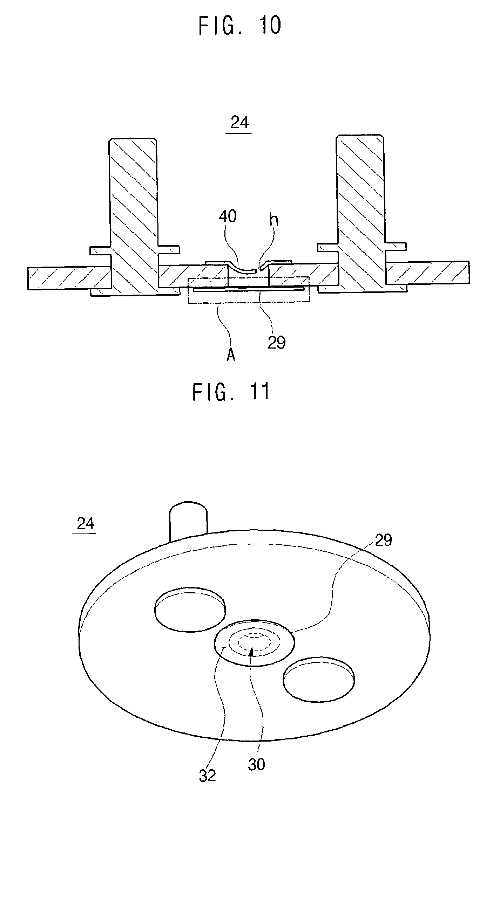

FIGS. 9 to 11 are diagrams showing a lid according to another exemplary embodiment of the present invention. FIG. 9 is a top perspective view of an integrated lid, FIG. 10 is a cross-sectional view taken along line I-I' of FIG. 9, and FIG. 11 is a bottom perspective view of the integrated lid shown in FIG. 9.

Referring to FIGS. 9 to 11, the lid according to another exemplary embodiment of the present invention has an integrated structure, not the bonding structure of the resin plate 24B and the rubber plate 24A as shown in FIGS. 6 to 8. According to the integrated structure, in another exemplary embodiment of the present invention, the inner surface of a hole 30 formed at the center of the lid has no step but may have a predetermined diameter.

In the exemplary embodiment, as shown in FIG. 9, a rupture preventing plate 40 attached on the top of the lid 24 is provided in order to prevent the gas permeable membrane 29 attached onto the bottom of the lid 24 from being expanded. The center of the rupture preventing plate 40 has a protrusion that protrudes inside the hole 30 to prevent the gas permeable membrane 29 from being expanded. That is, when the gas permeable membrane 29 extends inside the hole due to the gas pressure, the gas permeable membrane is physically prevented from being extended at a protruding height of the protrusion of the rupture preventing plate 40 attached to an opposite side thereto, to thereby suppressing the expansion of the gas permeable membrane 29. The protrusion in the rupture preventing plate is not a particularly required element and even though the rupture preventing plate has a plane shape, the rupture preventing plate may prevent the gas permeable membrane from being expanded and prevent the gas permeable membrane from being ruptured. Further, when a net-shaped structure is installed outside the gas permeable membrane, the same effect as above can be achieved.

A hole h is formed on the surface of the protrusion of the rupture preventing plate 40, such that gas is discharged from the inside to the outside through the hole h. In the exemplary embodiment, one hole h is formed on the surface of the protrusion of the rupture preventing plate, but a plurality of holes may be formed on the surface of the protrusion in order to smoothly discharge the gas. Instead of using the rupture preventing plate, the rupture pressure of the gas permeable membrane may increase and a gas permeable amount may be increased by using another method.

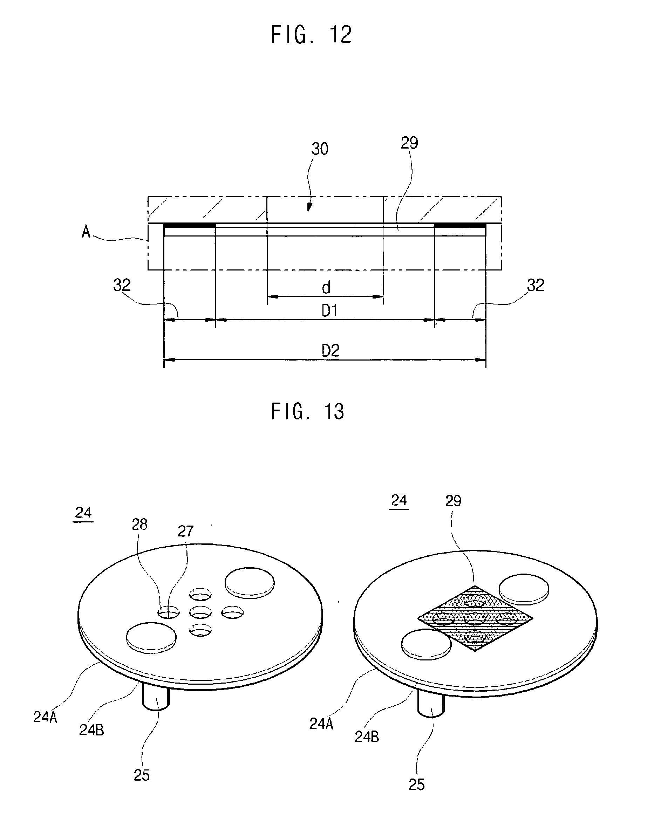

FIG. 12 is an enlarged diagram of part A shown in FIG. 10 and is a cross-sectional view of a part where the gas permeable membrane is installed.

The gas permeable membrane may be bonded by using a bonding means such as an adhesive agent or a double-sided tape or a method such as thermal melting.

When the gas permeable membrane is attached by using the double-sided tape or the adhesive agent, diameters D2 and D1 are bonded to each other, such that the gas permeable amount may be increased by increasing a diameter of a non-bonded portion of the gas permeable membrane and the rupture pressure of the gas permeable membrane may be controlled by controlling a diameter of a hole d.

Even when the gas permeable membrane is attached by not using not the double-sided tape or the adhesive agent but the thermal melting, a diameter of a thermal melted portion is controlled to achieve the same effect as the case of using the double-sided tape or the adhesive agent.

In general, in the electrochemical cell, the gas may be generated by an intended electrochemical reaction and the gas may be unintentionally generated by a sub-reaction due to impurities.

In the case of the electric double layer capacitor of the electrochemical cell, hydrogen, carbon dioxide, and carbon monoxide are primarily generated by moisture or impurities such as a functional group.

In general, plastic films such as a fluorocarbon resin, Polyethylene Terephthalate (PET), Polyvinylidene Chloride (PVDC), Polyethylene (PE), Polypropylene (PP), Polyphenylene Sulfide (PPS), Polyether Ether Ketone (PEEK), and Polyimide (PI) have slight gas permeability. Accordingly, the plastic films may be used as the gas permeable membrane.

In particular, when the gas permeable membrane is used in the electrochemical cell using the liquid electrolyte, the gas permeable membrane is exposed to a polar solvent for a long time, and as a result, the gas permeable membrane requires excellent chemical resistance.

However, the excellent chemical resistance of the gas permeable membrane serves as an obstacle element in installing the gas permeable membrane in the electrochemical cell.

In general, a material having the excellent chemical resistance is bad in bonding property. That is, there is a limit in using a bonding means such as the adhesive agent including a tape or the thermal melting. Therefore, in the exemplary embodiment of the present invention, surface treatment for improving the bonding property such as corona discharging is performed with respect to at least one surface of the gas permeable membrane 29. As a result, the gas permeable membrane 29 and the lid 29 may be easily bonded to each other by using the thermal melting or the adhesive agent.

The gas permeable membrane is preferably installed so that a surface of the gas permeable membrane that is not surface-treated faces the inside of the electrochemical cell.

Meanwhile, as the capacity of the electrochemical cell increases, the amount of generated gas increases in proportion to the capacity. Therefore, the area of the gas permeable membrane should be increased in order to discharge the gas generated from the electrochemical cell to the outside.

However, as the area of the gas permeable membrane increases, the rupture pressure depending on the pressure of the gas permeable membrane decreases.

Table 1 shows a result of measuring the rupture pressure of a Fluorinated Ethylene Propylene (FEP) film with a thickness of 25 microns and having one surface which is subjected to adhesive surface treatment depending on the diameter at a room temperature in atmospheric pressure, which is being sold by DuPont.

**[Table 1]**

| | Rupture pressure (kgf/cm²) Diameter: 4 mm | Rupture pressure (kgf/cm²) Diameter: 6 mm | Rupture pressure (kgf/cm²) Diameter: 8 mm |
|---|---|---|---|
| #1 | 4.3 | 2.6 | 1.7 |
| #2 | 4.2 | 2.6 | 1.7 |
| #3 | 4.1 | 2.4 | 1.7 |
| Average | 4.2 | 2.5 | 1.7 |

The measurement result of Table 1 shows that as the diameter of the gas permeable membrane increases, the rupture pressure decreases.

The rupture pressure of the gas permeable membrane needs to be higher than 1 at atmospheric pressure in order to discharge the gas generated from the electrochemical cell through the gas permeable membrane by installing the gas permeable membrane in the electrochemical cell, and as a result, the rupture pressure of the gas permeable membrane is preferably in the range of 1.5 to 20 on practical aspects.

As described above, the gas is generated inside of the electrochemical cell and the internal pressure of the electrochemical cell increases due to the generated gas.

If the internal pressure is excessively increased by an abnormal operation, the electrochemical cell may explode and in order to prevent the electrochemical cell from exploding, when the internal pressure is higher than a predetermined value, a safety vent that discharges gas by using a valve or a rupture plate is installed.

The gas permeable membrane described above may also serve as the safety vent. When the gas permeable membrane also serves as the safety vent, the diameter of a structure where the gas permeable membrane is installed is preferably controlled so that the rupture pressure of the gas permeable membrane is equal to or higher than 3.0 to 4.0 at atmospheric pressures.

Considering the situation, the gas permeable membrane is preferably installed in the electrochemical cell as shown in FIG. 13.

FIG. 13 is a bottom perspective view of a lid of a cylindrical electrochemical cell according to another exemplary embodiment of the present invention.

As shown in FIG. 13, in the lid of the cylindrical electrochemical cell according to another exemplary embodiment of the present invention, a plurality of holes, for example, 5 holes are formed on the terminal plate 24 in order to control the rupture pressure of the gas permeable membrane 29. In this case, 5 holes having the first diameter are formed at the center of the rubber plate 24A and 5 holes having the second diameter larger than the first diameter, which are overlapped with the 5 holes formed at the center of the rubber plate 24A are formed at the center of the resin plate 24B.

Further, the gas permeable membrane 29 covering the holes formed at the center of the bottom surface of the resin plate 24B is installed.

As shown in FIG. 13, by installing the gas permeable membrane in a plurality of holes, the gas permeable amount is increased and the rupture pressure is prevented from being decreased due to the increase of the diameter of the gas permeable membrane to thereby appropriately maintain the rupture pressure of the gas permeable membrane.

Further, the rupture pressure may be controlled by variously modifying the shapes of the holes such as a circular shape, a long hole shape, a rectangular shape, and an oblong shape.

When the material of the lid 24 constituting the case is substituted by a metallic material such as aluminum, the gas permeable membrane and the lid 24 that are subjected to the surface-treatment such as the corona discharging to improve the bonding property may be melt by applying heat in a method such as inductive heating or bonded by using the tape.

However, when the lid 24 constituting the case is made of a material which is difficult to be thermally molten, such as plastic, the gas permeable membrane 29 and the lid 24 are preferably bonded to each other by using the double-sided tape.

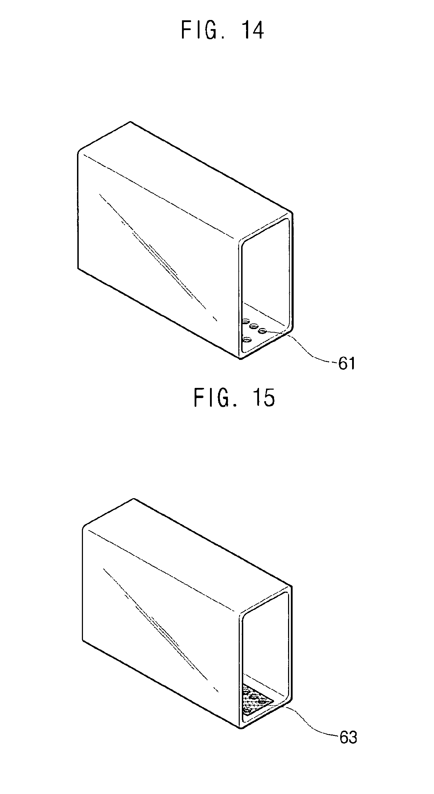

FIGS. 14 and 15 are perspective views showing one example in which a gas permeable membrane is installed on a side of a body constituting a case of a rectangular electrochemical cell according to yet another exemplary embodiment of the present invention.

As shown in FIG. 14, one or a plurality of holes 61 are formed on the side of the body constituting the case of the rectangular electrochemical cell and as shown in FIG. 15, a gas permeable membrane 63 may be installed in one or the plurality of holes.

Of course, in the exemplary embodiment of FIGS. 14 and 15, the gas permeable membrane 63 installed on the side of the body constituting the case of the rectangular electrochemical cell is described as an example, but it is apparent that the gas permeable membrane 63 may also be installed on the side of the cylindrical body constituting the case of the cylindrical electrochemical cell of FIGS. 2 and 3.

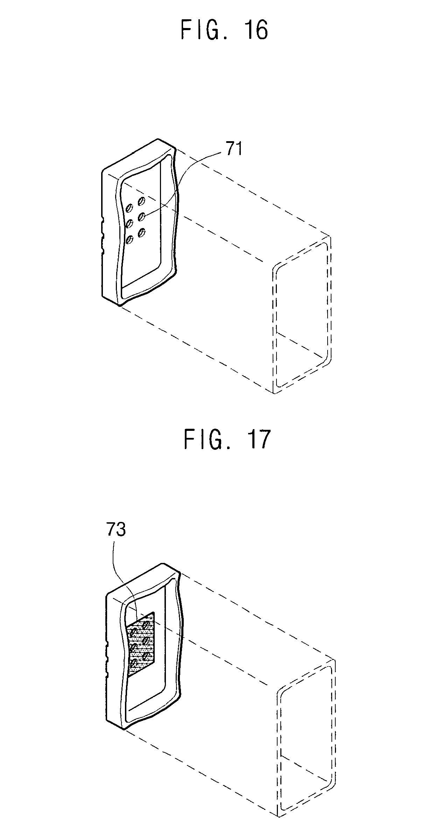

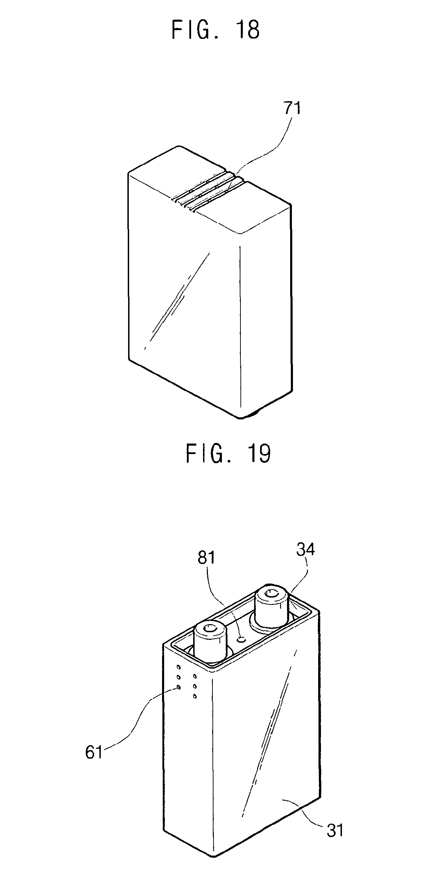

FIGS. 16 and 17 are perspective views showing one example in which a gas permeable membrane is installed on the bottom of a body constituting a case of a rectangular electrochemical cell according to yet another exemplary embodiment of the present invention and FIG. 18 is a perspective view specifically showing the shape of the bottom of a body constituting the case of the rectangular electrochemical cell shown in FIGS. 16 and 17.

As shown in FIG. 16, a plurality of holes 71, e.g., 6 holes in the exemplary embodiment are formed on the bottom of the body constituting the case of the rectangular electrochemical cell and as shown in FIG. 17, the gas permeable membrane 73 is installed in the 6 holes formed on the bottom.

Of course, in the exemplary embodiment of FIGS. 16 and 17, the gas permeable membrane 73 installed on the bottom of the rectangular body constituting the case of the rectangular electrochemical cell is described as an example, but it is apparent that the gas permeable membrane 73 may also be installed on the bottom of the cylindrical body 21 constituting the case of the cylindrical electrochemical cell of FIGS. 2 and 3.

Meanwhile, as shown in FIGS. 16 and 17, in the case of the rectangular electrochemical cell in which the gas permeable membrane is installed on the bottom of the body thereof, as shown in FIG. 18, a groove is formed along a plurality of holes formed on the bottom of the body. Since the bottom of the electrochemical cell is installed while being closely attached or is covered with an insulating sleeve to serve as an element that interrupts smooth gas discharge, the groove is formed along the plurality of holes.

FIG. 19 is a perspective view showing a rectangular electrochemical cell according to yet another exemplary embodiment of the present invention.

As shown in FIG. 19, in yet another exemplary embodiment of the present invention, a hole 81 is formed not only on the side of a body 31 constituting a case 31, 34 of the rectangular electrochemical cell but also in a lid 34, to maximize discharge performance of gas generated from the inside of the case 31, 34.

In the above-mentioned exemplary embodiments, in order to increase the gas permeable amount and appropriately maintain the rupture pressure of the gas permeable membrane, the size and the number of holes where the gas permeable membrane is installed are controlled. As described above, in order to control the rupture pressure of the gas permeable membrane, the size and the shape of holes where the gas permeable membrane is installed may be controlled. In the exemplary embodiments, one gas permeable membrane is installed to cover the plurality of holes, but an additional gas permeable membrane may be installed for each hole and gas permeable membranes having different properties may be installed for each hole. Further, in the exemplary embodiments, the sizes of the holes where the gas permeable membrane is installed are the same as each other, but the sizes of the holes where the gas permeable membrane is installed may be different from each other.

When gas permeable membranes having different properties are installed for each hole, for example, gas permeable membranes having different gas permeabilities may be installed for each hole or a rupture membrane serving as the safety vent may be installed.

The gas permeable membrane is preferably made of particularly, a material having a hydrophobic property in which a surface exposed to an electrolyte is not wetted with the electrolyte in order to maintain a gas permeable property.

The gas permeable membrane may be bonded to the electrochemical cell by using the thermal melting or the double-sided tape and the bonded surface is more preferably subjected to the surface treatment for improving the bonding property such as the corona discharging in order to ease the bonding.

The gas permeable membrane should be expanded to the outside at a predetermined amount or more by the pressure so that the gas permeable membrane is ruptured by the internal pressure. The rupture pressure of the gas permeable membrane may be controlled by using the expansion property.

As described above, in FIGS. 6 to 8, 13, 14, 15, 16, and 17, the hole where the gas permeable membrane 29 is installed has a shape such as a counter bore that is constituted by a hole having a large diameter and a hole having a small diameter. That is, an inner surface of the hole has a structure to have a step. In the shape, by controlling the diameter of the hole and the depth of the step, the rupture pressure of the gas permeable membrane may be controlled. As a result, the structure may be used as a structure to increase a permeation area of the gas permeable membrane and the rupture pressure of the gas permeable membrane.

Further, the shape such as the counter bore may be made by the tape or the adhesive agent attached with the gas permeable membrane.

In addition, as shown in FIGS. 9 to 12, even though the shape such as the counter bore is not made, the diameter of the bonded portion (a circular band) to which the gas permeable membrane is attached is formed larger than that of the hole, such that the gas permeable amount may be increased without decreasing the rupture pressure of the gas permeable membrane.

In the exemplary embodiments of the present invention, the electric double layer capacitor is primarily used among the electric energy storage devices, but the present invention is not limited to only the electric double layer capacitor. For example, the present invention may be applied to even a capacitor not using the electrolyte.

Further, the present invention may be used in an electric energy storage device such as a capacitor such as an electric double layer capacitor, an aluminum electrolytic capacitor, or a film capacitor, a battery such as a lead storage battery, a nickel hydrogen battery, a nickel cadmium battery, or a lithium ion battery or a fuel battery.

Although the structure and operation of the present invention have been disclosed through various exemplary embodiments, various modification and variations are possible by those skilled in the art, without departing from the scope of the invention as disclosed in the accompanying claims.

### [Industrial Applicability]

The present invention can minimize the electrochemical cell such as the capacitor or the secondary battery and improve reliability and safety.

## Claims

1. An electrochemical cell storing electric energy, comprising:
an electrode storing the electric energy;
a case with one or more holes receiving the electrode and connected with the outside; and
a gas permeable membrane installed in the hole,
wherein a bonded surface of the gas permeable membrane is subjected to surface treatment such as corona discharge to improve a bonding property.

2. The electrochemical cell according to claim 1, wherein the rupture pressure of the gas permeable membrane is equal to or higher than 1.5 at atmospheric pressure.

3. The electrochemical cell according to claim 1, wherein the gas permeable membrane has a hydrophobic property.

4. The electrochemical cell according to claim 1, wherein the gas permeable membrane is bonded to the case by thermal melting.

5. The electrochemical cell according to claim 1, wherein the gas permeable membrane is bonded to the case by using a double-sided tape.

6. The electrochemical cell according to claim 1, wherein a lid constituting the case includes:
a rubber plate exposed to the outside and having a hole with a first diameter; and
a resin plate provided on the bottom surface of the rubber plate and having a hole with a second diameter larger than the first diameter,
wherein the rubber plate and the resin plate are coupled to each other so that the hole with the first diameter is overlapped with the hole with the second diameter, to form the holes of the case.

7. The electrochemical cell according to claim 1, wherein a groove is formed outside the hole.

8. The electrochemical cell according to claim 1, wherein the gas permeable membrane is made of one material of a fluorocarbon resin, Polyethylene Terephthalate (PET), Polyvinylidene Chloride (PVDC), Polyethylene (PE), Polypropylene (PP), Polyphenylene Sulfide (PPS), Polyether Ether Ketone (PEEK), and Polyimide (PI).

9. An electrochemical cell storing electric energy, comprising:
an electrode storing the electric energy;
a case with at least one hole receiving the electrode and connected with the outside; and
a gas permeable membrane installed in the at least one hole,
wherein the rupture pressure of the gas permeable membrane is configured to be equal to or higher than a predetermined atmospheric pressure by controlling at least one of the number, size, and shape of the at least one hole.

10. The electrochemical cell according to claim 9, wherein the shape of the at least one hole includes a circular shape, a long hole shape, a rectangular shape, and an oblong shape.

11. The electrochemical cell according to claim 9, wherein the predetermined atmospheric pressure is equal to or higher than 1.5 at atmospheric pressure.

12. The electrochemical cell according to claim 9, wherein the at least one hole has the shape of a counter bore.

13. The electrochemical cell according to claim 9, wherein the gas permeable membrane has a hydrophobic property.

14. The electrochemical cell according to claim 9, wherein the rupture pressure of the gas permeable membrane is controlled by using a means for suppressing the expansion of the gas permeable membrane.

15. The electrochemical cell according to claim 9, wherein the size of the inside of a bonded portion of the gas permeable membrane is larger than that of the at least one hole.

## Patentansprüche

1. Elektrochemische Zelle zum Speichern elektrischer Energie, umfassend:
eine Elektrode, die die elektrische Energie speichert;
ein Gehäuse mit einer oder mehreren Öffnungen, das die Elektrode aufnimmt und mit der Außenseite verbunden ist.
eine gasdurchlässige Membran, die in der Öffnung installiert ist,
wobei eine verbundene Oberfläche der gasdurchlässigen Membran einer Oberflächenbehandlung wie beispielsweise Koronaentladung ausgesetzt wird, um eine Verbindungseigenschaft zu verbessern.

2. Elektrochemische Zelle nach Anspruch 1, wobei der Berstdruck der gasdurchlässigen Membran gleich oder höher als 1,5 at bei atmosphärischem Druck ist.

3. Elektrochemische Zelle nach Anspruch 1, wobei die gasdurchlässige Membran eine hydrophobe Eigenschaft aufweist.

4. Elektrochemische Zelle nach Anspruch 1, wobei die gasdurchlässige Membran durch thermisches Verschmelzen mit dem Gehäuse verbunden wird.

5. Elektrochemische Zelle nach Anspruch 1, wobei die gasdurchlässige Membran durch das Nutzen eines doppelseitigen Klebebands mit dem Gehäuse verbunden wird.

6. Elektrochemische Zelle nach Anspruch 1, wobei ein Deckel, des Gehäuses, einschließt:
eine Gummiplatte, die der Umgebung ausgesetzt ist und über eine Öffnung mit einem ersten Durchmesser verfügt; und
eine Harzplatte, die an der unteren Fläche der Gummiplatte bereitgestellt ist und über eine Öffnung mit einem zweiten Durchmesser, der größer als der erste Durchmesser ist, verfügt,
wobei die Gummiplatte und die Harzplatte miteinander verbunden sind, sodass die Öffnung mit dem ersten Durchmesser von der Öffnung mit dem zweiten Durchmesser überlappt wird, um die Öffnungen des Gehäuses zu bilden.

7. Elektrochemische Zelle nach Anspruch 1, wobei eine Kerbe außerhalb der Öffnung geformt ist.

8. Elektrochemische Zelle nach Anspruch 1, wobei die gasdurchlässige Membran aus einem Material aus einem Fluorcarbonharz, Polyethylen-Terephthalat (PET), Polyvinylidenchlorid (PVDC), Polyethylen (PE), Polypropylen (PP), Polyphenylensulfid (PPS), Polyetheretherketon (PEEK), und Polyimid (PI) hergestellt ist.

9. Elektrochemische Zelle zum Speichern elektrischer Energie, umfassend:
eine Elektrode, die die elektrische Energie speichert;
ein Gehäuse mit mindestens einer Öffnung, das die Elektrode aufnimmt und mit der Außenseite verbunden ist; und
eine gasdurchlässige Membran, die in der mindestens einen Öffnung installiert ist,
wobei der Berstdruck der gasdurchlässigen Membran dafür konfiguriert ist, gleich oder höher als ein vorgegebener atmosphärischer Druck zu sein, indem mindestens eines der Elemente Anzahl, Größe, und Form der mindestens einen Öffnung gesteuert wird.

10. Elektrochemische Zelle nach Anspruch 9, wobei die Form der mindestens einen Öffnung eine runde Form, eine Langloch, eine rechteckige Form, und eine längliche Form einschließt.

11. Elektrochemische Zelle nach Anspruch 9, wobei der vorgegebene atmosphärische Druck gleich oder größer als 1,5 at atmosphärischer Druck ist.

12. Elektrochemische Zelle nach Anspruch 9, wobei die mindestens eine Öffnung die Form einer Schulterbohrung aufweist.

13. Elektrochemische Zelle nach Anspruch 9, wobei die gasdurchlässige Membran eine hydrophobe Eigenschaft aufweist.

14. Elektrochemische Zelle nach Anspruch 9, wobei der Berstdruck der gasdurchlässigen Membran durch das Benutzen von Mitteln zur Unterdrückung der Ausdehnung der gasdurchlässigen Membran gesteuert wird.

15. Elektrochemische Zelle nach Anspruch 9, wobei die Größe der Innenseite eines verbundenen Teils der gasdurchlässigen Membran größer ist als die der mindestens einen Öffnung.

## Revendications

1. Cellule électrochimique de stockage d'énergie électrique, comprenant :
une électrode de stockage de l'énergie électrique ;
un boîtier avec un ou plusieurs trous recevant l'électrode et relié avec l'extérieur ; et
une membrane perméable au gaz installée dans le trou,
dans lequel une surface liée de la membrane perméable aux gaz est soumise à un traitement de surface tel que la décharge à effet corona pour améliorer une propriété de liaison.

2. Cellule électrochimique selon la revendication 1, dans lequel la pression de rupture de la membrane perméable au gaz est égale ou supérieure à 1,5 at pression atmosphérique.

3. Cellule électrochimique selon la revendication 1, dans lequel la membrane perméable au gaz a des propriétés hydrophobes.

4. Cellule électrochimique selon la revendication 1, dans lequel la membrane perméable au gaz est liée au boîtier par fusion thermique.

5. Cellule électrochimique selon la revendication 1, dans lequel la membrane perméable au gaz est liée au boîtier via une bande adhésive double face.

6. Cellule électrochimique selon la revendication 1, dans lequel un couvercle du boîtier comprend :
une plaque de caoutchouc exposée à l'extérieur et ayant un trou avec un premier diamètre ; et
une plaque de résine disposée sur la surface inférieure de la plaque de caoutchouc et ayant un trou avec un deuxième diamètre supérieur au premier diamètre,
dans lequel la plaque de caoutchouc et la plaque de résine sont couplées l'une à l'autre de sorte que le trou avec le premier diamètre est chevauché par le trou avec le second diamètre, pour former les trous du boîtier.

7. Cellule électrochimique selon la revendication 1, dans lequel une rainure se trouve à l'extérieur du trou.

8. Cellule électrochimique selon la revendication 1, dans lequel la membrane perméable au gaz est en résine de fluorocarbone, Polyéthylène téréphthalate (PET), Chlorure de polyvinylidène (PVDC), Polyéthylène (PE), Polypropylène (PP), Sulfure de polyphénylène (PPS), Polyéther-éther-cétone (PEEK) ou Polyimide (Pi).

9. Cellule électrochimique de stockage d'énergie électrique, comprenant :
une électrode de stockage de l'énergie électrique ;
un boîtier avec un ou plusieurs trous recevant l'électrode et relié avec l'extérieur ; et
une membrane perméable au gaz installée dans l'au moins un trou,
dans lequel la pression de rupture de la membrane perméable au gaz est configurée pour être égale ou supérieure à une pression atmosphérique prédéterminée en contrôlant au moins le nombre, la taille ou la forme de l'au moins un trou.

10. Cellule électrochimique selon la revendication 9, dans lequel la forme de l'au moins un trou comprend une forme circulaire, une forme longue, une forme rectangulaire, et une forme oblongue.

11. Cellule électrochimique selon la revendication 9, dans lequel la pression atmosphérique prédéterminée est égale ou supérieure à 1,5 at pression atmosphérique.

12. Cellule électrochimique selon la revendication 9, dans lequel l'au moins un trou a la forme d'un chambrage.

13. Cellule électrochimique selon la revendication 9, dans lequel la membrane perméable au gaz a des propriétés hydrophobes.

14. Cellule électrochimique selon la revendication 9, dans lequel la pression de rupture de la membrane perméable au gaz est contrôlée à l'aide d'un moyen pour supprimer la dilatation de la membrane perméable au gaz.

15. Cellule électrochimique selon la revendication 9, dans lequel la grandeur de l'intérieur d'une partie liée de la membrane perméable au gaz est supérieure à celle de l'au moins un trou.
